# EUROPÄISCHE PATENTANMELDUNG

(11) **EP 1 466 956 A1**
(43) Veröffentlichungstag der Anmeldung: **13.10.2004**
(21) Anmeldenummer: 03007900.8
(22) Anmeldetag: 07.04.2003
(51) Int. Cl.: C09K 15/00, C09D 7/12

(54) **Hochkonzentrierte, lagerstabile wässrige Dispersionen zur Stabilisierung von Lacken und Lasuren**

(71) Anmelder: CLARIANT INTERNATIONAL LTD., 4132 Muttenz (CH)
(72) Erfinder: Die Erfindernennung liegt noch nicht vor

(57) **Zusammenfassung**

Hochkonzentrierte, lagerstabile wässrige Dispersionen eines Lichtschutzmittels oder eines Gemisches eines Lichtschutzmittels und eines Antioxidants, mit einem Aktivstoffgehalt von mehr als 40 Gew.% und einer Viskosität von 0,01 bis 2 Pa s, die zumindest ein nichtionisches Netzmittel als Dispergator und ein Polyglykol als Lösungsvermittler enthalten. Weitere Bestandteile können Ölsäure, ein anionisches Netzmittel und ein Biozid sein. Diese Dispersionen lassen sich einfach in Lackmassen, z.B. eine wässrige Dispersion, eine wässrige Emulsion oder eine wässrige Lösung eines Bindemittels auf der Basis von vernetzbarem Alkyd-Harz, Acryl-Harz, Polyester-Harz oder Polyurethan-Harz einarbeiten.

## Beschreibung

Öffentliche Meinung und Gesetzgebung stellen an die Verarbeiter von Lacken in zunehmendem Masse die Forderung, die Emissionen von Lösemitteln zu verringern. Diese Auflagen werden mit der erhöhten Umweltbelastung einerseits und den arbeitshygienischen Gegebenheiten andererseits begründet. Wässrige Beschichtungsstoffe haben sich in den letzten Jahren eine stetig wachsende Position im Markt erobert. Die kataphoretische Tauchgrundierung und der Wasserfüller sind inzwischen Stand der Technik bei der Lackierung von Personenwagen. Wasserbasislacke haben in den letzten Jahren die Bandfreigabe erhalten und sogar Wasserklarlacke werden inzwischen bereits am Band eingesetzt. Selbst die Transportversiegelungen und Schutzwachse erfolgen heute schon auf wässriger Basis. Auch in den Bereichen der Beschich-tung von Anbauteilen aus Kunststoffen oder Metall, der Beschichtung von Land- und Baumaschinen, Büromöbeln, elektrischen oder elektronischen Geräten, Regalteilen, Leuchten usw. werden heute schon Wasserlacke eingesetzt.

Wasserbasierende Lacksysteme und Lasuren bei denen entweder wasserlösliche Bindemittel oder wasserverdünnbare Bindemittel oder eine Kombination aus wasserlöslichen und wasserverdünnbaren Bindemitteln eingesetzt werden, sind in der Regel nur mit von Natur aus flüssigen Stabilisatoren mischbar. Der grösste Teil der kommerziell erhältlichen Stabilisatoren jedoch ist fest, pulverförmig und in Wasser unlöslich bzw. schwerlöslich.

Flüssige Präparate, Lösungen oder Dispersionen, weisen gegenüber den Pulverformen zusätzlich eine Reihe von Vorteilen auf, wie beispielsweise keine Staubentwicklung bei der Handhabung, keine Benetzungsprobleme durch Klumpenbildung und nicht zuletzt eine leichte Dosierbarkeit in automatischen Anlagen. Die Haltbarkeit von Flüssigpräparationen ist jedoch bei der Lagerung über längere Zeiträume oft nur unbefriedigend und so ist oftmals die Bildung von Agglomeraten oder eines Sediments zu beobachten. Nicht hinreichend dispergierte Partikel sind oft die Ursache für häufig vor-kommende Verstopfungen in automatisierten Dosier- und Mischsystemen.

Alle organischen Materialien, seien es natürliche oder synthetische, müssen normalerweise gegen den Abbau durch Umwelteinflüsse und UV-Licht durch Zugabe von Stabilisatoren, insbesondere durch die Zugabe von Lichtschutzmitteln und Antioxidantien geschützt werden.

Wässrige Dispersionen von Lichtschutzmitteln, insbesondere von UV-Absorbern, sind schon seit längerem bekannt. Ihre Verwendung ist hauptsächlich beim Färben von Synthese-fasern insbesondere Polyesterfasern oder säuremodifizierten Polyesterfasern Stand der Technik. Die Konzentrationen der in den entsprechenden Handelsformen vorliegenden Aktivkompo-nenten liegt meist im Bereich von deutlich unter 40 Gewichtsprozent. Daneben zeigt sich häufig, dass die Lagerstabilität der Dispersion nicht ausreichend ist, was sich durch Sedimentation der Aktivstoffe bemerkbar macht.

EP 225287 beschreibt Präparationen für Färbebäder bei denen als weitere Zusätze zur Stabilisierbarkeit elektrolytempfindliche Verdickungsmittel enthalten um einen bestimmten Viskositätsbereich einhalten zu können.

EP 345219 beschreibt wässrige Dispersionen von 2-(2'-Hydroxyphenyl-)benzotriazolen zur Verbesserung der Lichtechtheit von Färbungen auf Synthesefasern. Als Zusatz wird ein saurer Ester oder dessen Salz eines Alkylenoxidadduktes gefordert.

EP 354174 beschreibt wässrige Zusammensetzungen von 2-(2'-Hydroxyphenyl-)-benzotriazolen zur Verbesserung der Lichtechtheit von Färbungen auf synthetischen Fasermaterialien insbesondere Polyesterfasern oder säuremodifizierten Polyesterfasern. Die Präparationen enthalten als weitere Komponente ein Kondensationprodukt einer nicht etherverbrückten aromatischen Sulfonsäure und Formaldehyd.

EP 468921 beschreibt die Darstellung einer wässrigen Zubereitung von o-Hydroxyphenyl-triazinen zur Verbesserung der Lichtechtheit von Färbungen auf synthetischen Fasermaterialien insbesondere Polyesterfasern.

EP 474595 beschreibt wässrige Dispersionen von speziell substituierten 2-(2'-Hydroxyphenyl)-benzotriazolen alleine oder in einem Gemisch mit einem Benzophenon zur Verwendung beim Färben von synthetischen Fasermaterialien insbesondere Polyesterfasern oder säuremodifizierten Polyesterfasern.

EP 490819 beschreibt die wässrige Präparation eines Gemisches aus einer Benzotriazol-verbindung und einer 2-Hydroxybenzophenonverbindung zur Verwendung beim Färben von synthetischen Fasermaterialien insbesondere Polyesterfasern oder säuremodifizierten Polyesterfasern.

EP 820978 beschreibt die Behandlung von Textilmaterialien zur Verbesserung der Lichtstabilität mit wässrigen Zubereitungen von 2-Hydroxybenzophenonverbindungen.

Die DE-OS 3511924 beschreibt wässrige Zubereitungen sterisch gehinderter Amin-Licht-schutzmittel (HALS) für den Einsatz im Lackbereich. Die nach dieser Offenlegungsschrift hergestellten Dispersionen sind jedoch nicht ausreichend lagerstabil um eine längere Lagerzeit ohne Qualitätseinbussen zu gewährleisten.

Gegenstand der vorliegenden Erfindung sind Dispersionen einzelner oder in Gemischen vorliegender Lichtschutzmittel und Antioxidantien und ihre Verwendung bei der Stabilisierung von Lacken und Lasuren, insbesondere von wasserbasierenden Basislacken, Klarlacken und Lasuren. Die Erfindung betrifft insbesondere lagerstabile wässrige Präparationen von in Wasser schwerlöslichen bis unlöslichen Feststoffen, die als Lichtschutzmittel oder Antioxydantien eingesetzt werden, mit einer Teilchengrösse kleiner als <15µm, insbesondere kleiner als <10µm, optimalerweise kleiner als <5µm zur Stabilisierung wasserbasierender Lacksysteme und Lasuren.

Die Erfindung ist dadurch gekennzeichnet, dass die hochkonzentrierten, lagerstabilen wässrigen Dispersionen einen Aktivstoffgehalt von mehr als 40 Gew.%, bevorzugt 45-57 Gew.% und besonders bevorzugt 47-54 Gew.% und eine Viskosität von 0,01 bis 2 Pa s aufweisen und zumindest ein nichtionisches Netzmittel als Dispergator und ein Glykol als Lösungsvermittler enthalten.

Das Lichtschutzmittel oder das Gemisch eines Lichtschutzmittels und eines Antioxidants gemäss der Erfindung sollte einen Schmelzpunkt von mindestens 35°C aufweisen, damit sie bei der Verarbeitung zu wässrigen Dispersionen, die häufig bei erhöhter Temperatur stattfindet, nicht schmelzen.

Bevorzugte Lichtschutzmittel sind die Produkte mit den Formeln I bis VIII 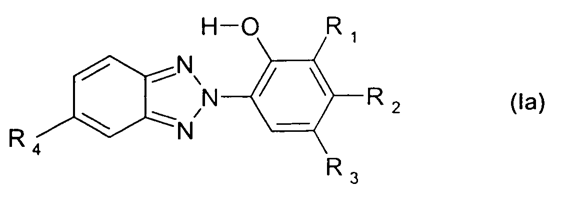 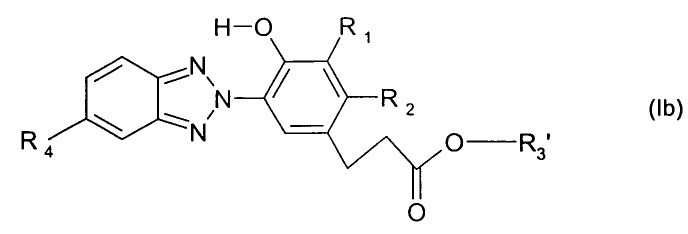 (feste Produkte wie beispielsweise in US 4853471 beschrieben) 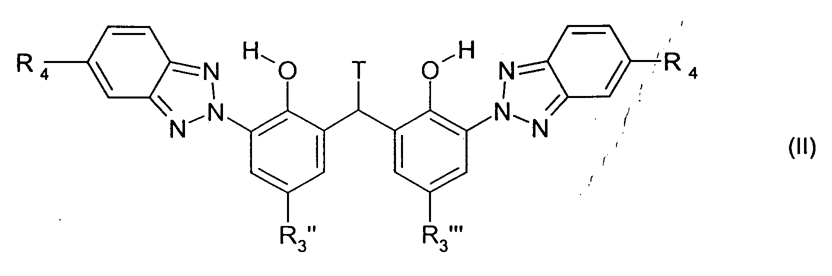 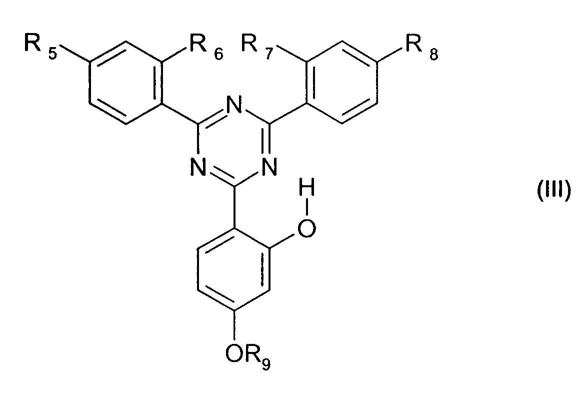 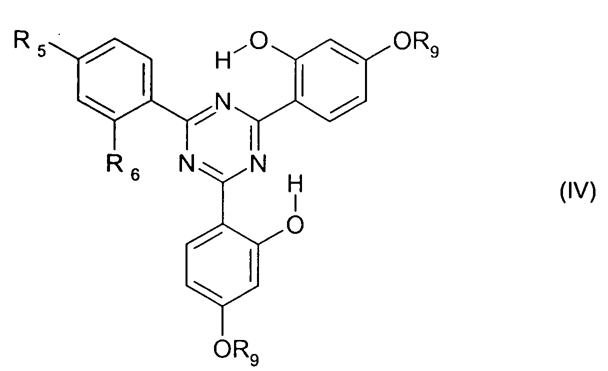 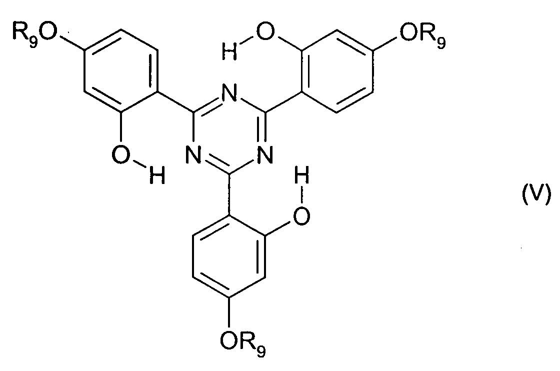 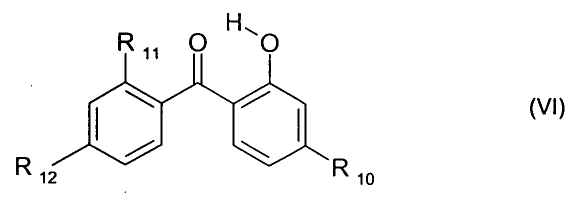 (wie beispielsweise in EP 820 978 A1 beschrieben) 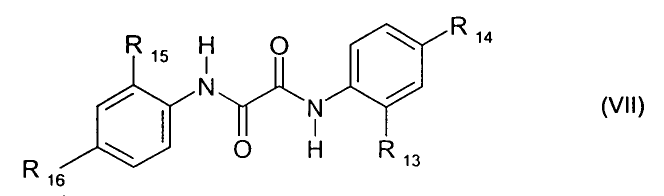 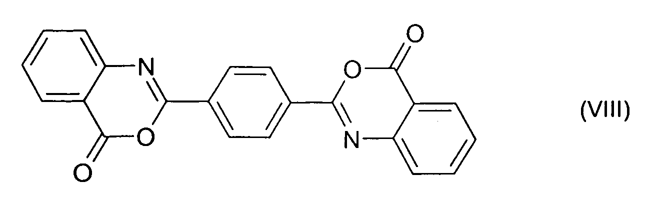 worin die Symbole R₁ bis R₁₆ die folgenden Bedeutungen haben:
R₁, R₂ und R₃ unabhängig voneinander Wasserstoff, lineares oder verzweigtes C₁-C₁₂ Alkyl, Cycloalkyl, Aralkyl; bevorzugt Methyl, sec-Butyl, tert-Butyl, tert-Amyl, tert-Octyl, Cyclohexyl oder eine Gruppe 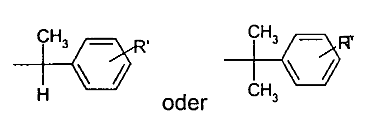 worin R' für Wasser-stoff oder C₁-C₁₂ Alkyl steht.
R₄ Wasserstoff, Halogen wie Cl oder Br, Carboxy oder eine Sulfonsäure Gruppe, lineares oder verzweigtes C₁-C₁₂Alkyl, Cycloalkyl oder niedriges Alkoxy;
R₃' , R₃" und R₃''' unabhängig voneinander Wasserstoff, lineares oder verzweigtes C₁-C₁₂Alkyl, Cycloalkyl, Aralkyl;
T Wasserstoff, C₁-C₁₂Alkyl oder eine Oxogruppe;
R₅, R₆, R₇ und R₈ unabhängig voneinander Wasserstoff, lineares oder verzweigtes C₁-C₈ Alkyl, unsubstituiertes oder mit niederem Alkyl substituiertes Aryl;
R₉ Wasserstoff oder eine lineare oder verzweigte, aliphatische oder cycloaliphatische Alkyl-Gruppe mit C₁-C₁₂ welche gegebenenfalls durch eine oder mehrere OH-Gruppen oder eine oder mehrere Alkoxy-Gruppen oder gemischt durch OH- und Alkoxy-Gruppen substituiert sein kann.
   - R₁₀: OH, Alkoxy mit C₁-C₁₂, Hydroxyethoxy oder eine Gruppe 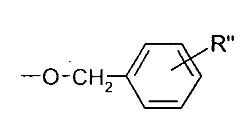 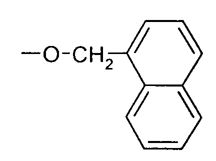 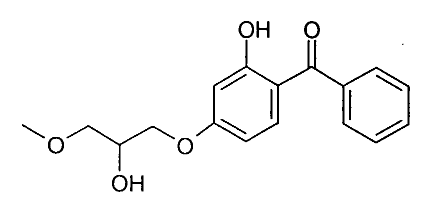 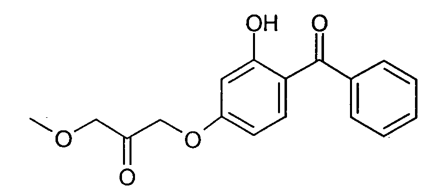 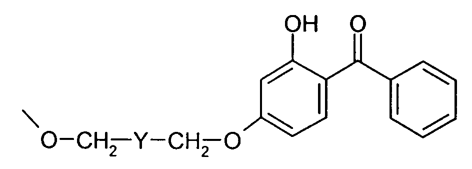
   worin Y eine direkte Bindung oder eine Gruppe 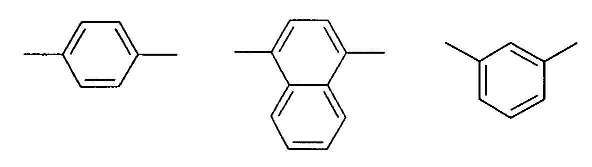 und worin R" Wasserstoff, Methyl oder Methoxy ist,
R₁₁ Wasserstoff, Halogen, Cyan, C₁-C₈ Alkyl, Cycloalkyl, Alkoxy, Phenoxy, Phenyl, Hydroxy oder Hydroxyethoxy;
R₁₂ Wasserstoff, Halogen, Cyan, C₁-C₈ Alkyl, Cycloalkyl, Alkoxy, Phenoxy, Phenyl, Hydroxy oder Hydroxyethoxy oder eine Gruppe 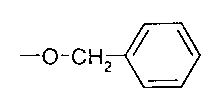
R₁₃, R₁₄, R₁₅ und R₁₆ gleich oder unabhängig voneinander Wasserstoff, lineares oder verzweigtes Alkyl, OH, Alkoxy.

Die sterisch gehinderte Piperidinderivate (HA(L)S) welche gemäss der Erfindung zum Einsatz gelangen, gehören der gut bekannten Gruppe von Stabilisatoren an, die bereits für die Verbesserung der Lichhtechtheit oder der mechanischen Eigenschaften verwendet werden. Solche sterisch gehinderte Piperidinderivate sind z.B. solche der Formeln (IXa) - (IXc)

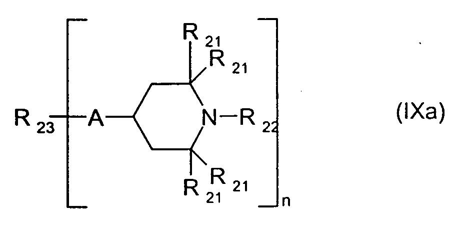

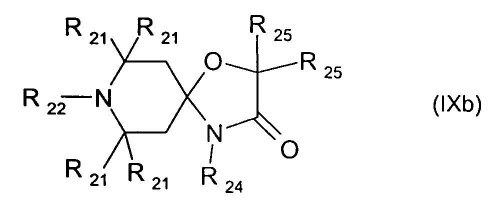

Reaktionsproducte von 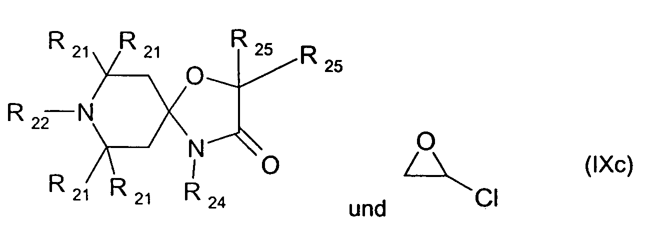 worin, unabhängig von einander,
- A: -O- oder -NR₂₀-,
- R₂₀: H, C₁-C₁₈-Alkyl oder eine der Gruppen 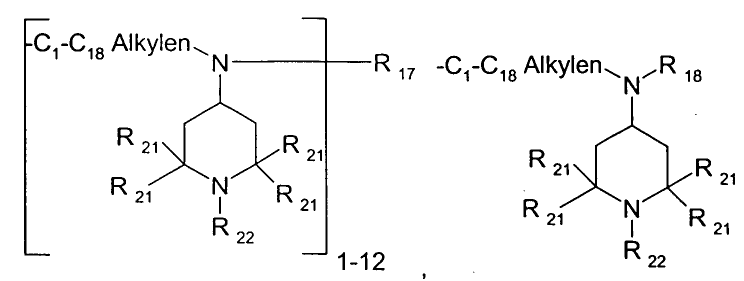
R₁₇ H, C₁-C₁₈-Alkyl,
R₁₈ H, einen aliphatischen, cycloaliphatischen, aromatischen oder heteroaromatischen Rest,
R₂₁ C₁-C₁₈-Alkyl, oder jeweils zwei an dem gemeinsamen Kohlenstoffatom gebundene R₂₁ einen C₄-C₈-Cycloalkyl Rest,
R₂₂ H oder C₁-C₁₈-Alkyl, C₇-C₁₈-Alkylaryl,
R₂₃ H, einen n-wertigen aliphatischen, cycloaliphatischen, aromatischen oder heteroaromatischen Rest,
R₂₄ C₁-C₁₈-Alkyl oder -C(O)-C₁-C₁₈-Alkyl;
R₂₅ H, C₁-C₁₈-Alkyl, C₄-C₁₈-Cycloalkyl oder jeweils zwei an dem gleichen Kohlenstoffatom gebundene R₅ einen C₄-C₁₈-Cycloalkyl Rest,
n eine ganze Zahl > 0
bedeuten.

Als weiteres Additiv können die folgenden Antioxydantien in den erfindungsgemässen Dispersionen enthalten sein:
1.1 Alkylierte Monophenole, z.B. 2,6-Di-tert-butyl-4-methylphenol, 2-butyl-4,6-dimethylphenol, 2,6-Di -tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 24a-Methyl-cyclohexyl)-4,6-dimethylphenol, 2,6-Di-octadecyl-4-methylphenol, 2,4.6-Tricyclo-hexylphenol, 2,6-Di-tert-butyl-4-methoxymethylphenol, 2,6-Di-nonyl-4-methylphenol, 2,4-Dimethyl-6-(1'-methyl-undec-l'-yl)-phenol, 2,4-Dimethyl-6-(1'methyl-heptadecyl-phenol, 2,4-Dimethyl-6-(1'-methyl-tridec-l'-yl)-phenol und Mischungen davon.
1.2 Alkylthiomethylphenole, z.B. 2,4-Di-octylthiomethyl-6-tert-butylphenol, 2,4-Dioctyl-thiomethyl-6-methylphenol, 2,4-Di-octylthiornethyl-6-ethylphenol, 2,6-Didodecyl-thiomethyl-4-nonylphenol.
1.3 Hydrochinone und alkylierte Hydrochinone, z.B. 2,6-Di-tert-butyl-4-methoxyphenol, 2,5-Di-tert-butyl-hydrochinon, 2,5-Dl-tert-amyl-hydrochinon, 2,6-Diphenyl-4-octa-decyloxyphenol, 2,6-Di-tert-butyl-hvdrochinon, 2,5-Di-tert-butyl-4-hydroxyanisol, 3,5-Di-tert-butyl-4-hydroxyanisol, 3,5-Di-lert-butyl-4-hydroxyphenylstearat, Bis-(3,5-di-tert-butyl-4-hydroxyphenyl)adipat.
1.4 Tocopherole, z.B. α-Tocopherol, β-Tocopherol, γ-Tocopherol, δ-Tocopherol und Mischungen davon (Vitamin E).
1.5 Hydroxylierte Thiodiphenylether, z.B. 2,2'-Thio-bis(6-tert-butyl-4-methylphenol), 2,2'-Thio-bis(4-octylphenol), 4,4'-Thio-bis-(6-tert-butyl-3-methylphenol), 4,4'-Thiobis-(6-tert-butyl-2-methylphenol), 4,4'-Thio-bis-(3,6-di-sec.-amylphenol), 4,4'-Bis-(2,6-di-methyl-4-hydroxyphenyl)-disulfic.
1.6 Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(amethyl-cyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyli-den-bis-(4,6-di-tert-butylphenol), 2.2'-Ethyliden-bis-(6-tertbutyl-4-isobutylphenol), 2,2'-Methylen-bis-[6-(α-methylbenzyl)-4-nonylphenol], 2,2'-Methylen-bis-[6-(α,α-di-methylbenzyl)-4-nonylphenol], 4,4'-Methylen-bis-(2,6-di-tert-butylphenol), 4,4'-Methy-len-bis-(6-tert-bulyl-1-2-methylphenol), 1,1-Bis-(5-tert-butyl-4-hydroxy-2-methyl-phenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1, 1-Bis-(5-tert-butyl-4-hydroxy-2-methylphenyl)-3-n-dodecylmercaptobutan, Ethylenglycol-bis-[3,3-bis-'(3'-tert-butyl-4'-hydroxyphenyl)-butyrat], Bis-(3-tert-butyl-4-hydroxy-5-methyl-phenyl)-dicyclo-pentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-ndodecylmercaptobutan, 1,1,5,5-Tetra-(5-tert-butyl-4-hydroxy-2-methylphenyl)-pentan.
1.7 O-, N- und S-Benzylverbindungen, z.B. 3,5,3',5'-Tetra-tert-butyl-4,4'-dihydroxydibenzylether, Octadecyl-4-hydroxy-3.5-dimethylbenzyl-mercaptoacetat, Tris-(3,5-di-tert-butyl-4-hydroxvbenzyl)-amin, Bis-(4-tert-butyl-3-hydroxy-2,6-dimethylbenzyl)-di-thioterephthalat, Bis-(3,5-di-tert-butyl-4-hydroxybenzyl)sulfid, Isooctyl-3,5-di-tert-butyl-4-hydroxybenzyl-mercaptoacetat.
1.8 Hydroxybenzylierte Malonate, z.B. Dioctadecyl-2,2-bis-(3,5-di-tert-butyl-2-hydrorybenzyl)-malonat, Di-octadecyl-2-(3-tert-butyl-4-hydroxy-5-methylbenzyl)-malonat, Didodecylmercaptoethyl-2,2-bis-(3,5-ditert-butyl-4-hydroxybenzyl)-malonat, Di[4(1,1,3,3-tetramethylbutyl)phenyl], 2,2-bis(3,5-di-tert-butyl-4-hydroxybenzyl)-malonat.
1.9 Hydroxybenzyl-Aromaten, z.B. 1,3,5-Tris-(3,5-di-tert-buty)-4-hydroxybenzyl)-2,4,6-trimethylbenzol, 1,4-Bis-(3,5-di-tert-butyl-4-hydröxybenzyl)-2,3,5,6-tetramethylbenzot 2,4,6-Tris-(3,5-di-tert-buryl-4-hydroxybenzyl)-phenol.
1.10 Triazinverbindungen, z.B. 2,4-Bis-octylmercapto-6(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris-(3,5-di-tert-butyl-4-hydroxyphenoxy)1,2,3-triazin, 1,3,5-Tris-(3,5-di-tert-butyl-4-hy-droxybenzyl)isocyanurat, 1,3,5-Tris(4-tert-butyl-3-hydroxy-2,6-dimethylbenzyl)-iso-cyanurat, 2,4,6-Tris(3,5-di-tert-butyl-4-hydroxyphenylethyl)-1,3,5-triazin, 1,3,5-Tris-(3,5-di-tert-butyl-4-hydroxyphenylpropionyl)hexahydro-1,3,5-triazin, 1,3,5-Tris(3,5-di-cyclohexyl-4-hydroxybenzyl)-isocyanurat.
1.11 Benzylphosphonate, z.B. Dimethyl-2,5-di-tert-butyl-4-hydroxybenzylphosphonat, Diethyl-3,5-di-tertbutyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzylphosphonsäuremonoethylesters
1.12 Acylaminophenole, 4-Hydroxylaurinsäureamid, 4-Hydroxystearinsäureanilid, N-(3,5-di-tert-butyl-4-hydroxyphenyl)-carbaminsäureoctylester.
1.13 Ester der β-(3.5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexan-diol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapenta-decanol, Trimethylhexandiol, Trimethylolpropan, 4-Hydroxymethyl-1-phospha-2,6,7-trioxabicyclo[222]-octan.
1.14 Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1.9-Nonandiol, Ethylenglycol, 12-Propandiol, Neopentylglycol, Thiodiethylenglycol, Diethylenglycol, Triethylenglycol, Pentaerythrit, Tris-(hydroxy)-ethyl-isocyanurat, N,N'-Bis(hydroxyethyl)-oxalsäurediamid, 3-Thiaundecanol, 3-Thia-pentadecanol, Trimethylhexandiol, Trimethylolpropan, 4-Hydroxymethyl-1-phospha-2,6,7-trioxabicyclo[2-22]octarn.
1.15 Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexan-diol, 1,9-Nonandiol, Ethylenglycol, 1,2-Propandiol, Neopentylglycol, Thiodiethylen-glycol, Diethylenglycol, Triethylenglycol, Pentaerythrit, Tris-(hydroxy)-ethyl-iso-cyanurat, N,N'-Bis-(hydroxyethyl)-oxalsäurediamid, 3 Thiaundecanol, 3-Thiapenta-decanol, Trimethyl hexandiol, Trimethylolpropan, 4-Hydroxymethyl-1-phospha-2,6,7-trioxabicyclo-[222]octan.
1.16 Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxy)ethylisocyanurat, N,N-Bis-(hydroxyethyl)-oxalsäurediamid, 3-Thiaundecanol, 3-Thia-pentadecanol, Trimethyl-hexandiol, Trimethylolpropan, 4-Hydroxymethyl-1-phospha-2,6,7-trioxabicyclo- [2-22]-octan.
1.17 Amide der β-(3,5-Di-tert-butyl-4-hydroxyphenyl)-propionsäure, wie z.B. N,N'-Bis-(3,5-di-tert-buty14-hydroxyphenylpropionyl)-hexamethylendiamin, N,N'-Bis-(3,5-ditert-butyl-4-hydroxyphenylpropionyl)-trimethylendiamin, N,N'-Bis-(3,5-di-tert-butyl-4-hydroxyphenylpropionyl)-hydrazin.

Weitere Additive, die in den erfindungsgemässen Dispersionen enthalten sein können, wären:
2. Metalldesaktivatoren, wie z.B. N,N' -Diphenyloxalsäurediamid, N-Salicylal-N'salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino- 1,2,4-triazol, Bis-(benzyliden)-oxalsäuredihydrazid, Oxanilid, Isophthalsäure-dihydrazid, Sebacinsäurebis-phenylhydrazid, N,N'-Diacetyl-adipinsäure-dihydrazid, N,N'-Bis-salicyloyloxalsäure-dihydrazid, N,N'-Bis-salicyloyl-thiopropionsäure-dihydrazid.
3. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-penta-erythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis-(2,4-di-tert-butyl-6-methylphenyl)-methylphosphit, Bis-(2,4-ditert-butyl-6-methyl-phenyl)-ethylphosphit.
4. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.
5. Polyamidstabilisatoren, wie z.B. Kupfersalze in Kombination mit Jodiden und/oder Phosphorverbindungen und Salze des zweiwertigen Mangans.
6. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.
7. Nukleierungsmittel, wie z.B. 4-tert-Butylbenzoesäure, Adipinsäure, Diphenylessigsäure.
8. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.
9. Sonstige Zusätze. wie z.B. Weichmacher, Gleitmittel, Emulgatoren, Pigmente, optische Aufheller, Flammschutzmittel, Antistatika, Treibmittel.

Die erfindungsgemässen hochkonzentrierten, wässrigen Dispersionen enthalten vorzugsweise ausserdem Ölsäure als Fliessverbesserer, damit eine entsprechende Viskosität ohne zu grosse Verdünnung gewahrt bleibt. Bevorzugt werden Mengen von 0.2 - 5.0 Gew.%, mehr bevorzugt von 0.2 - 4.0 Gew.% und besonders bevorzugt von 0.2 - 3.0 Gew.% eingesetzt.

Bevorzugt enthalten die erfindungsgemässen hochkonzentrierten, wässrigen Dispersionen neben nichtionischen Netzmittel auch ein anionisches Netzmittel, was eine optimale Dispergierung der Aktivstoffe erlaubt und damit eine verbesserte Lagerstabilität gewährt.

Die Aktivstoffe in den erfindungsgemässen hochkonzentrierten, wässrigen Dispersionen weisen vorzugsweise eine Partikelgrösse von D₅₀ = 0,5 -2 µm und D₉₀ < 3,5 µm auf.

Die erfindungsgemässen hochkonzentrierten, wässrigen Dispersionen haben eine Lagerstabilität von mehr als 4 Wochen bei 50° C, was erfahrungsgemäss einer Lagerung bei Raumtemperatur von über 1 Jahr entspricht.

Besonders bevorzugte wässnge Dispersionen gemäss der Erfindung haben einen Gehalt von 47-54 Gew.% Aktivstoff, 5-10 Gew.% Netzmittel, < 1Gew.% Biozid, 5-10 Gew.% Lösungsvermittler, 0.2-3 Gew.% Ölsäure in 30-40 Gew.% Wasser.

Die erfindungsgemässen Stabilisator-Präparationen können hergestellt werden, indem der Stabilisator in Form eines Pulvers, Kompaktates oder Granulates in Gegenwart der Ölsäure, des Glykols und Dispergiermittels und/oder üblicher Zusatzstoffe dispergiert wird. Das Dispergiermittel und/oder Zusatzstoffe werden vorzugsweise zunächst mit der Ölsäure vermischt, der Stabilisator eingerührt und je nach Kornhärte des eingesetzten Stabilisators mit Rührwerken, Dissolvern, Rotor-Stator-Mühlen, Kugelmühlen, Rührwerkskugelmühlen, wie Sand- und Perlmühlen, Schnellmischern, Knetapparaturen oder Hochleistungsperlmühlen dispergiert. Die erhaltene Präparation wird gegebenenfalls mit Ölsäure weiter verdünnt.

Die erfindungsgemässen hochkonzentrierten, wässrigen Dispersionen werden in wässrigen Lackmassen eingearbeitet, wobei sie in Mengen von 0,3 bis 3 Gew.% der Gesamtrezeptur eingesetzt werden und mit allen bekannten Bindemittel-Systemen kompatibel sind. Beispiele solcher Systeme sind wässrige Dispersionen, wässrige Emulsionen oder wässrige Lösungen eines Bindemittels auf der Basis von vernetzbarem Alkyd-Harz, Acryl-Harz, Polyester-Harz oder Polyurethan-Harz.

In den nachfolgenden Beispielen werden folgende Produkte eingesetzt:

| | |
|---|---|
| UVA 1 = Tinuvin 326 | 2-(2'-Hydroxy-3'-tert.butyl-5'-methylphenyl)-5- |
| | chlorobenzotriazol |
| UVA 2 = Tinuvin P | 2-(2'-Hydroxy-5'-methylphenyl)-benzotriazol |
| UVA 3 = Tinuvin 328 | 2-(2'-Hydroxy-3',5'-di-tert.amylphenyl)-benzotriazol |
| UVA 4 = Tinuvin 329 | Bis-[2-hydroxy-5-tert.octyl-3-(benzotriazol-2-yl)- |
| | phenyl]-methan |
| UVA 5 = Cyasorb 1164 P | 2-[4,6-Bis(2,4-dimethylphenyl)-1,3,5-triazin-2-yl]-5- |
| | (octyloxy)phenol |
| UVA 6 = Tinuvin 405 | 2-[4,6-bis(2,4-dimethylphenyl)-1,3,5-triazin-2-yl]-5- |
| | [3-[(2-ethylhexyl)oxy]-2-hydroxypropoxy] phenol |
| UVA 7 = Tinuvin 1577 | 2-(4,6-Diphenyl-1,3,5-triazin-2-yl)-5-hexyloxyphenol |
| UVA 8 = Sanduvor 3041 | 2-Hydroxy-4-methoxybenzophenon |
| UVA 9 = Uvinul 3040 | 2,2'-Dihydroxy-4-methoxybenzophenon |
| UVA 10 = Sanduvor 3035 | 2-Hydroxy-4-n-octyloxybenzophenon |
| UVA 11 = Sanduvor VSU | N-(2-Ethoxyphenyl)-N'-(2-ethylphenyl)-ethandiamid |
| UVA 12 = Sanduvor EPU | N-(2-Ethoxy-5-tert.butylphenyl)-N'-(2-ethylphenyl)- |
| | ethandiamid |
| UVA 13 = Cyasorb UV-3638 | 2,2'-(1,4-Phenylen)bis[4H-3,1-benzoxazin-4-on] |
| UVA 14 | Zimtsäuremethylester |
| UVA 15 = Uvinul 3035 | Ethyl-2-cyan-3,3-diphenylacrylat |
| UVA 16 = Hostavin B-CAP | Tetraethyl-2,2'-(1,4-phenylen-dimethyliden)-bis- |
| | malonat |
| UVA 17 = Cyasorb UV-3346 | Poly[(6-morpholino-s-triazine-2,4-diyl)[2,2,6,6-tetra- |
| | methyl-4-piperidyl)imino]-hexamethylene[(2,2,6,6- |
| | tetramethyl-4-piperidyl)imino]] |
| | |
| HALS 1 = Tinuvin 770 | Bis-(2,2,6,6-tetramethyl-4-piperidyl)-sebacat |
| HALS 2 = Tinuvin 144 | Bis(1,2,2,6,6-pentamethyl-4-piperidyl)(3,5-di-tert.- |
| | butyl-4-hydroxybenzyl)butylpropandioat |
| HALS 3 = Sanduvor PR-31 | Propanedioic acid, [(4-methoxyphenyl)-methylene]-, |
| | bis(1,2,2,6,6-pentamethyl-4-piperidinyl)ester |
| HALS 4 = Sanduvor 3051 | 2,2,4,4-tetramethyl-7-oxa-3,20-diaza-dispiro- |
| | {5.1.11.2]heneicosan-21-on |
| HALS 5 = Hostavin N30 | Polymer aus der Reaktion von 2,2,4,4-Tetramethyl- |
| | 7-oxa-3,20-diaza-dispiro{5.1.11.2]heneicosan-21-on |
| | mit Epichlorhydrin |
| HALS 6 = Chimassorb 944 | Poly[(6-isooctylamino-s-triazine-2,4-diyl)[2,2,6,6- |
| | tetramethyl-4-piperidyl)imino]- |
| | hexamethylene[(2,2,6,6- tetramethyl-4-piperidyl)- |
| | imino]] |
| HALS 7 = Chimassorb 119 | 1,3,5-Triazine-2,4,6-triamine,N,N"'-[1,2-ethanediyl- |
| | bis[[[4,6-bis-[butyl(1,2,2,6,6-pentamethyl-4-piperi- |
| | dinyl)amino]-1,3,5-triazine-2-yl]imino]-3,1 -propane- |
| | diyl]]bis[N',N"-dibutyl-N',N"-bis(1,2,2,6,6-penta- |
| | methyl-4-piperidinyl)- |
| HALS 8 | 4-Hydroxy-2,2,6,6-tetramethylpiperidinyl-1-oxy |
| Dispergator-Mischung M1 | Oleyl-8-ethoxylat + Tetranatrium-N-(1,2-dicarboxy- |
| | ethyl)-N-octadecylsulfosuccinamat |
| Dispergator-Mischung M2 | Oleyl-10-ethoxylat + Tetranatrium-N-(1,2-dicarboxy- |
| | ethyl)-N-octadecylsulfosuccinamat |

Als Polyglykol wird ein Polyethylenglykolmonomethylether mit einer mittleren Masse im Bereich 470-530 g/mol eingesetzt.

### BEISPIEL 1

In einer Vertikalmühle werden

| | |
|---|---|
| 10 | Teilen Polyglykol |
| 8.5 | Teilen einer Dispergator-Mischung M1 |
| 1.0 | Teilen Ölsäure und |
| 0.2 | Teilen eines Biozids in 32.3 Teilen Wasser gemischt. |

Alsdann werden 48 Teile UVA 1 hinzugefügt und wird die Mischung mit Glasperlen (Durchmesser 1 mm) 5-6 Stunden gemahlen, bis die Partikelgrösse < 5 µm ist. Die so erhaltene Dispersion wird durch Filtration von den Perlen abgetrennt. Man erhält eine lagerstabile Dispersion.

### BEISPIEL 2

Nach dem gleichen Verfahren werden

| | |
|---|---|
| 20 | Teilen Polyglykol |
| 6 | Teilen Dispergator-Mischung M2 |
| 1.0 | Teilen Ölsäure und |
| 0.2 | Teilen eines Biozids in 24.8 Teilen Wasser gemischt und 48 Teile UVA 1 hinzugefügt. |

### BEISPIEL 3

Nach dem gleichen Verfahren werden

| | |
|---|---|
| 5 | Teilen Polyglykol |
| 6 | Teilen Dispergator-Mischung M2 |
| 1.0 | Teilen Ölsaure und |
| 0.2 | Teilen eines Biozids in 39.8 Teilen Wasser gemischt und 48 Teile UVA 1 hinzugefügt. |

### BEISPIEL 4

Nach dem gleichen Verfahren werden

| | |
|---|---|
| 10 | Teilen Polyglykol |
| 6 | Teilen Dispergator-Mischung M2 |
| 1.0 | Teilen Olsaure und |
| 0.2 | Teilen eines Biozids in 30.8 Teilen Wasser gemischt und 52 Teile UVA 2 hinzugefügt. |

### BEISPIEL 5

Nach dem gleichen Verfahren werden

| | |
|---|---|
| 5 | Teilen Polyglykol |
| 6 | Teilen Dispergator-Mischung M2 |
| 1.0 | Teilen Ölsäure und |
| 0.2 | Teilen eines Biozids in 39.8 Teilen Wasser gemischt und 48 Teile UVA 3 hinzugefügt. |

### BEISPIEL 6

Nach dem gleichen Verfahren werden

| | |
|---|---|
| 5 | Teilen Polyglykol |
| 6 | Teilen Dispergator-Mischung M2 |
| 1.0 | Teilen Ölsäure und |
| 0.2 | Teilen eines Biozids in 37.8 Teilen Wasser gemischt und 50 Teile UVA 4 hinzugefügt. |

### BEISPIELE 7 - 28

Nach dem gleichen Verfahren werden entsprechend Beispiel 3 resp. 5 jeweils

| | |
|---|---|
| 5 | Teilen Polyglykol |
| 6 | Teilen Dispergator-Mischung M2 |
| 1.0 | Teilen Ölsäure und |
| 0.2 | Teilen eines Biozids |

in 37.8 Teilen Wasser gemischt und 48 Teile der folgenden Stabilisatoren hinzugefügt:
Beispiel 7 UVA 5
Beispiel 8 UVA 6
Beispiel 9 UVA 7
Beispiel 10 UVA 8
Beispiel 11 UVA 9
Beispiel 12 UVA 10
Beispiel 13 UVA 11
Beispiel 14 UVA 12
Beispiel 15 UVA 13
Beispiel 16 UVA 14
Beispiel 17 UVA 15
Beispiel 18 UVA 16
Beispiel 19 HALS 1
Beispiel 20 HALS 2
Beispiel 21 HALS 3
Beispiel 22 HALS 4
Beispiel 23 HALS 5
Beispiel 24 HALS 6
Beispiel 25 HALS 7
Beispiel 26 UVA 17
Beispiel 27 HALS 4 + HALS 8
Beispiel 28 HALS 4 + UVA 11

### NACHWEIS DER VERBESSERTEN LAGERSTABILITÄT

Je ein Muster der nach DE-OS 3511924 Beispiel 1 und Beispiel 2 dargestellten Dispersionen werden mit den Dispersionen nach den vorher beschriebenen Beispielen 22 bzw. 27 bezüglich deren Lagerstabilitäten bei Raumtemperatur und 50°C geprüft. Als Mass für die Stabilität gilt die Zeit, nach welcher das Absetzen der Produkte beginnt:

| | **Lagerung bei Raumtemperatur** | **Lagerung bei 50°C** |
|---|---|---|
| DE-OS 3511924 Beispiel 1 | 8-9 Wochen | 6 Wochen |
| Beispiel 22 | 22 Wochen | 18-19 Wochen |
| DE-OS 3511924 Beispiel 2 | 12 Wochen | 8-9 Wochen |
| Beispiel 27 | 24 Wochen | 20 Wochen |

### APPLIKATIONSBEISPIEL

Ein auf Wasser basierendes Harzsystem bestehend aus einer Styrol-modifizierten Acrylat-Emulsion wird folgendermassen hergestellt: Eine Mischung bestehend aus

| | |
|---|---|
| 106.0 | Teile Butylglycol und |
| 132.1 | Teilen entmineralisiertes Wasser |

wird unter gutem Rühren langsam zu

| | |
|---|---|
| 761.9 | Teilen Neocryl® XK-62 (Avecia) |

zugegeben.

Dieses System dient in den weiteren Versuchen als Basismaterial zur Prüfung der in den Beispielen genannten Dispersionen z. B. bezüglich Klarlöslichkeit, was auf eine gute Kompatibilität und Verteilung schliessen lässt.

Die so stabilisierten "Lacke"werden mit einer Rakel (Filmbreite 80 mm) mit 100 µm Nassfilmdicke auf hochtransparenten Polyesterfolien und/oder mattschwarz pigmentierten LENETA-Charts aufgetragen und bei 50°C und 80°C im Umluftofen getrocknet. Anschliessend werden die Polyesterfolien auf Transparenz begutachtet, die LENETA-Charts hinsichtlich eventuell auftretendes Ausblühverhaiten, was einen Hinweis auf Inkompatibilität und Sättigung im Lack darstellt.

### APPLIKATION IN EINEM WÄSSRIGEN 2K-PUR KLARLACK FÜR OEM-ANWEN-DUNGEN

Die Polyol-Komponente wird auf Basis der folgenden Bestandteile zusammengesetzt.

| | | |
|---|---|---|
| Bayhydrol® VP LS 2271 | 28.33 | (Bayer) |
| Bayhydrol® VP LS 2231 | 31.03 | (Bayer) |
| Byk® 345 Lieferform | 0.29 | (Byk Chemie) |
| Byk® 333 25%-ig in Wasser | 0.28 | (Byk Chemie) |
| Dest. Wasser | 12.86 | |

Die Polyolkomponente wird intensiv per Hand oder Schnellrührer (1000 rpm) verrührt. Das Vermischen der Einzelbestandteile sollte in der vorgegebenen Reihenfolge geschehen.

### HÄRTERKOMPONENTE

| | | |
|---|---|---|
| Desmodur® N 3600 | 17.28 | (Bayer) |
| Butylglycolacetat / Solvesso® 100 (1 : 1) | 7.33 | (Exxon Mobile) |

Die in den Beispielen beschriebenen Dispersionen werden vor der Vermischung mit der Härterkomponente zur Polyolkomponente gegeben. Dazu sollte die Vermischung mit der Härterkomponente frühestens 12 Stunden nach der Herstellung der Polyolkomponente erfolgen. Die Vermischung der Polyolkomponente mit der Härterkomponente erfolgt in 2 Schritten:
1) durch Herstellung einer Voremulsion durch Verrühren der Komponenten per Hand oder
2) Laborrührer

Die Endvermischung erfolgt durch Strahldispergierung bei 50 bar (z. B. Airlesspumpe Merkur 060.020-DP F, Fa. Walther/Wuppertal) oder mit Hilfe eines Dispermaten (5 min bei 2000 rpm).

Vergleichsversuche durch Zugabe flüssiger HALS-Stabilisatoren auf Basis von Butylgykol zur Harzlösung:

| | |
|---|---|
| Tinuvin® 292 (Ciba) | starkes gelieren nach kurzer Zeit |
| Sanduvor® 3052 (Clariant) | starkes gelieren nach kurzer Zeit |

### APPLIKATION IN EINEM SOFTFEEL-LACK

Der Softfeel-Lack wird wie folgt hergestellt:

| **Position** | **Rohmaterial** | **Menge** | **Beschreibung** |
|---|---|---|---|
| 1 | CUR 21 | 54.70 | Bindemittel (Alberdingk-Boley) |
| 2 | Byk 024 | 0.60 | Entschäumer (Byk Chemie) |
| 3 | Dow Corning 67 | 0.40 | Netzmittel (Dow Corning) |
| 4 | Byk 044 | 0.20 | Entschäumer (Byk Chemie) |
| 5 | Worlée-Pol 1181/03 | 5.00 | Polyester (Worlée) |
| 6a | Butylglycol* | 3.50 | Lösungsmittel (BASF) |
| 6b | Wasser* | 30.00 | Lösungsmittel |
| 7 | Acematt TS-1 00 | 1.50 | Mattierungsmittel (Degussa) |
| 8 | DSX 1514 | 0.10 | Rheologie Additiv (Cognis) |
| 9 | Colanyl schwarz N230 | 4.00 | Pigmentpräparation (Clariant) |
| | | 100.00 | |

| | | | |
|---|---|---|---|
| * = Vor dem Einsatz mischen! | | | |

Zu diesem Lack werden 0.5 Gew.% der oben beschriebenen Dispersionen zugegeben. Die so stabilisierten "Lacke" werden mit einer Rakel (Filmbreite 80 mm) mit 100 µm Nassfilmdicke auf hochtransparenten Polyesterfolien aufgetragen und bei Raumtemperatur und bei 50°C im Umluftofen getrocknet. Anschliessend werden die Polyesterfolien auf Transparenz geprüft.

## Patentansprüche

1. Hochkonzentrierte, lagerstabile wässrige Dispersionen eines Lichtschutzmittels oder eines Gemisches eines Lichtschutzmittels und eines Antioxidants, **dadurch gekennzeichnet, dass** sie einen Aktivstoffgehalt von mehr als 40 Gew.% und eine Viskosität von 0,01 bis 2 Pa s aufweisen und zumindest ein nichtionisches Netzmittel als Dispergator und ein Polyglykol als Lösungsvermittler enthalten.

2. Wässrige Dispersionen gemäss Anspruch 1, wobei das Lichtschutzmittel oder das Gemisch eines Lichtschutzmittels und eines Antioxidants einen Schmelzpunkt von mindestens 35°C aufweist.

3. Wässrige Dispersionen gemäss Anspruch 1 oder 2, die ausserdem Ölsäure als Fliessverbesserer enthalten.

4. Wässrige Dispersionen gemäss Ansprüche 1 bis 3, die neben den nichtionischen Netzmittel ein anionisches Netzmittel enthalten.

5. Wässrige Dispersionen gemäss Ansprüche 1 bis 4, worin die Aktivstoffe eine Partikelgrösse von D₅₀ = 0,5-2 µm und D₉₀ < 3,5 µm aufweisen.

6. Wässrige Dispersionen gemäss Ansprüche 1 bis 5 mit einer Lagerstabilität von mehr als 4 Wochen bei 50° C.

7. Wässrige Dispersionen gemäss Ansprüche 1 bis 6, wobei der Aktivstoffgehalt 45-57 Gew.%, bevorzugt 47-54 Gew.%, beträgt.

8. Wässrige Dispersionen gemäss Anspruche 1 bis 7 mit einem Gehalt von 47-54 Gew.% Aktivstoff, 5-10 Gew.% Tensid, < 1Gew.% Biozid, 5-10 gew.% Lösungsvermittler, 0.2-3 Gew.% Ölsäure in 30-40 Gew.% Wasser.

9. Verwendung der wässrigen Dispersionen gemäss einem der vorhergehenden Ansprüche, bei der Herstellung von Lackmassen.

10. Lackmassen, in Form einer wässrigen Dispersion, die eine wässrige Dispersion gemäss einem der Ansprüche 1 bis 8 und eine wässrige Dispersion, eine wässrige Emulsion oder eine wässrige Lösung eines Bindemittels auf der Basis von vernetzbarem Alkyd-Harz, Acryl-Harz, Polyester-Harz oder Polyurethan-Harz enthalten.
